# EUROPEAN PATENT SPECIFICATION

(11) **EP 2 384 423 B1**
(45) Date of publication and mention of the grant of the patent: **25.02.2015**
(21) Application number: 09799049.3
(22) Date of filing: 24.11.2009
(51) Int. Cl.: G01H 9/00, G01B 11/25

(54) **MEASUREMENT OF VIBRATION CHARACTERISTICS OF AN OBJECT**
MESSUNG DREIDIMENSIONALER BEWEGUNGSEIGENSCHAFTEN
Mesure des caractéristiques de mouvements tridimensionnels

(30) Priority: 30.01.2009 IN KO01712009
(43) Date of publication of application: 09.11.2011
(73) Proprietor: Siemens Aktiengesellschaft, 80333 München (DE)
(72) Inventor: AKUR VENKATESAN, Varun, Bangalore 560102 (IN); BAGARIA, Venkatesh, Bangalore 560034 (IN); PADMA MADHURI, Garimella, Bangalore 560069 (IN)
(86) International application number: PCT/EP2009/065715
(87) International publication number: WO 2010/086044

(56) References cited:
- WO-A1-2009/083655
- DE-A1- 10 063 293
- US-A1- 2008 199 068
- US-B1- 6 209 396

## Description

The present invention relates to a method and apparatus for measuring vibration characteristics of moving objects.

Characterization of vibration motion is essential for the study of many physical and dynamic systems. Vibration frequency measurement is critical for estimating the life and health of complex structures or machine parts and also for performance analysis. Conventionally, strain gage, camera, and laser Doppler based methods have been employed for measuring vibrations. However, these methods exhibit potential drawbacks.

Strain gages are applied on the vibrating object with wires leading out of it. The strain gage measures change in resistance, as the strain in each of the points where the gages are placed, and hence only small displacement can be measured. The systems are primitive and necessitate extensive wiring as the number of points of measurement increases and are also not possible for use in rotating parts. Further, the systems need to be stuck on to the object which introduces errors due to mass loading and also makes it cumbersome due to the presence of wires. The systems are also limited by a minimum and maximum displacement to be measured. Moreover, they are not reusable.

Camera based systems capture displacement of various points on a surface over time and studies the vibration. However, these systems are limited by frame rates. The cost of cameras increases as the frame rates increases, thereby inducing a limit on the frame rate. Hence higher speeds cannot be captured as they have a maximum and minimum limitation of speed for a vibrating object to measure the vibrating frequency.

Conventionally, the laser vibrometers can measure vibrations at one point only. The systems use prohibitively expensive techniques and apparatuses to measure vibration at different directions. Further, they cannot measure spatial modes of vibration, which are required for damage and impact analysis.

It is an objective of the invention to eliminate or at least minimize the above mentioned problems.

The above objective is achieved by a method of measuring vibration characteristics associated to an object, wherein the method comprises illuminating an object using at least two light sources, the at least two light sources emitting light of distinct colors, wherein each of the at least two light sources are strobed at a respective delay, capturing reflected light from the object to result into one image of the object, the image comprising at least two distinguishable color channels capable of distinguishing the distinct colors of the light, and processing the image to compute the vibration characteristics associated with motion of the object from positions of points on the object in at least two distinguishable color channels of the image.

Thereby, enabling measurement of characteristics associated with vibration motion of the objects using low cost cameras.

According to an embodiment, each of the at least two light sources are strobed for a pre-determined on-time at the respective delay, wherein the respective delay is predetermined.

This enables capturing of plurality of points of the vibrating object at varying time instances in one image.

According to yet another embodiment, at least two light sources are selected from the group consisting of a red light source, a green light source, and a blue light source.

This enables capturing the reflected light from the object to result into an image as the object may comprise at least one of the principle colours.

According to yet another embodiment, the characteristic associated with motion of the object is one of the group consisting of displacement and frequency.

According to yet another embodiment, the displacement is computed as the distance between positions of the points on the object in two color channels of the at least two distinguishable colour channels of the image.

According to yet another embodiment, the displacement at points on the object is located using at least one of feature points or reflective markers.

According to yet another embodiment, the displacement is computed using a pattern matching algorithm.

Thereby, providing greater accuracy in environments where displacement associated with vibrations of a plurality of points on the object are measured.

According to yet another embodiment, the computation of the displacement using the pattern matching algorithm includes obtaining position information of the points on the object in two colour channels of the at least two colour channels of the image, reducing the object in the two color channels of the at least two colour channels of the image to a point to obtain point sets, mapping the corresponding points of the object in the point sets of the two color channels of the at least two colour channels of the image, and computing the displacement of the object as a distance between corresponding points of the object in the point sets of the two colour channels of the at least two color channels of the image.

According to yet another embodiment, the frequency of vibration of the object is computed using a time wrapping algorithm.

According to yet another embodiment, computation of the frequency using the wrapping algorithm includes, initializing a time period for obtaining position information of point on the vibrating object in the at least two distinguishable color channels of the image, wrapping the position information of the points on the object in the two color channels of the at least two color channels of the image into the time period, mapping the corresponding the points of the object in the point sets of the two color channels of the at least two color channels of the image at the time period, and computing time period of a dominant cycle by equating wrap time period of the points with the initialized time period.

Thereby, obtaining a clustered image of the object, indicating the dominant cycle, when the wrapping time of points is same as that of the time period.

According to yet another embodiment, wherein if the wrap time period of points is different of the time period, a time period corresponding to least value of error metric of the points in the point sets of the object in the at least two color channels of the image is computed.

According to yet another embodiment, the error metric represents root mean square value of the distance between distinct consecutive points in the point set of the object.

Thereby, obtaining the dominant cycle of vibration of the point on the object to determine the vibration frequency of the object.

Another embodiment includes an apparatus for measuring vibration characteristics associated to an object, wherein the apparatus comprises an illuminating device comprising at least two light sources, the at least two light sources emitting light of distinct colors, wherein each of the at least two light sources are strobed at a respective delay, a color camera to capture reflected light from the object to result into one image of the object, the image comprising at least two distinguishable color channels capable of distinguishing the distinct colors of the light, and a processor to process the image to the vibration characteristics associated with the object from positions of the object in the at least two distinguishable color channels of the image.

Thereby, eliminating the need of expensive high speed cameras for measuring characteristics associated with vibration of an object.

The present invention is further described hereinafter with reference to illustrated embodiments shown in the accompanying drawings, in which:
- FIG 1: illustrates a block diagram depicting an apparatus for measuring vibration characteristics associated with motion of an object according to an embodiment herein,
- FIG 2: illustrates a schematic diagram depicting strobing of light sources for acquiring high speed images an object according to an embodiment herein,
- FIG 3: illustrates an exemplary depiction of a sample collection phase of images according to an embodiment herein,
- FIG 4A: illustrates an exemplary depiction of clustered image samples at correct wrapping time according to an embodiment herein,
- FIG 4B: illustrates an exemplary depiction of scattered image samples at incorrect wrapping time according to an embodiment herein,
- FIG 5: illustrates a flow diagram illustrating a method of computing displacement of a vibrating object according to an embodiment herein, and
- FIG 6: illustrates a flow diagram illustrating a method of measuring frequency of vibration of an object using a time wrapping algorithm according to an embodiment herein.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

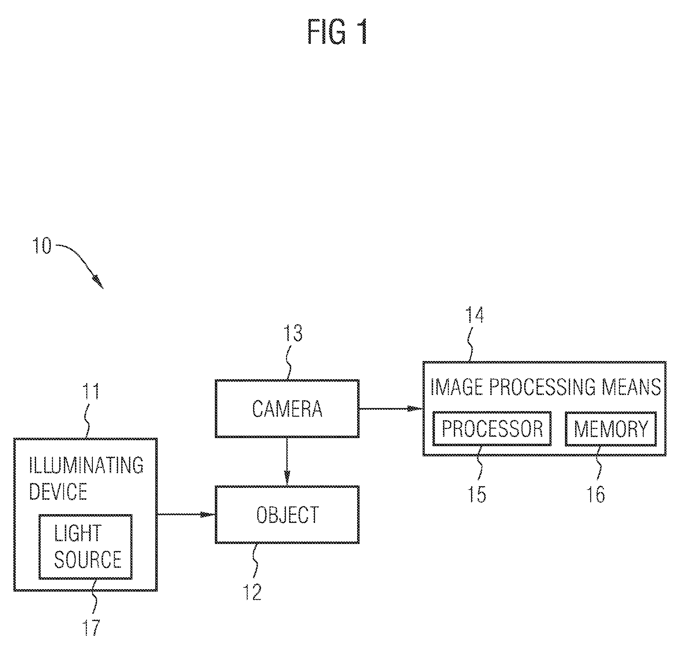

FIG 1 illustrates a block diagram depicting an apparatus for measuring a vibration characteristics associated with motion of an object 12 in accordance with an embodiment of the invention. The apparatus 10 comprises an illuminating device 11 to illuminate the object 12, a camera 13 to capture the image of the vibrating objects 12, and an image processing means 14 to compute a vibration characteristics of the objects 12. The vibration characteristics of objects 12 measured herein includes displacement and frequency.

In the shown example of Fig 1, the illuminating device 11 comprises at least two light sources 17, wherein the light sources emit light of distinct colors. The light sources 17 are selected from the principle colors red, green and blue. Each of the light sources 17 is strobed at a respective predetermined delay for a respective predetermined ON time. The object 12 shall reflect the light projected on it by the light sources 17 for the respective predetermined on-time. For example, the object 12 illuminated using an illuminating device 11 comprising three light sources 17, such as, a red light source, a green light source and a blue light source will reflect red color light, green color light and blue color light respectively.

The camera 13 is exposed for the entire duration of strobing of the light sources 17, and thus, captures the reflected light of distinct colors from the object 12 into one image comprising distinguishable color channels. The image obtained is a composite image comprising the plurality of color channels. For an example, the number of color channels in an image is equivalent to the number of light sources illuminating the object 12. Therefore, the composite image comprises the colour channels that are capable of distinguishing the distinct colors of the light produced by the light sources, for example, the red, green, and blue colors. Thus, illuminating the object 12 with light sources 17 emitting light of distinct colors and exposing the camera for the entire duration of strobing of the light sources 17 enable capturing the distinct colors of light reflected by the object 12 at varying instances of time into one image. Capturing the reflected light of distinct colors from the object 12 at varying instances of time in one image allows imaging of a vibrating object 12. The capturing of the reflected light from the object 12 in color channels capables of distinguishing the distinct colors of light enable determining the position of the object 12 at varying instances of time.

In an embodiment, the image processing means 14 comprises a processor 15 operationally coupled to a memory 16. The processor 15 processes the image captured by the camera 13 to compute the vibration characteristics of the object 12 by determining the positions of the feature points 18 of the object 12 in the different color channels of the image. The memory 16 may comprise stored there in algorithms to determine the displacement and frequency of vibration of the object 12. The displacements at various points 18 on the vibrating object 12 are captured by the location of the feature points. The pattern matching algorithm enables to match various points 18 on the object 12 in different color channels of the image. The distance between the points 18 of the object 12 in two color channels of the image provides the displacement of the object 12.

The image at different positions of the object 12 in different color channels are captured and are then analyzed to obtain the feature points. After a sufficient number of images are obtained, an algorithm fed to the memory 16 is used to calculate the frequency of each point 18 in the point set on the vibrating object 12.

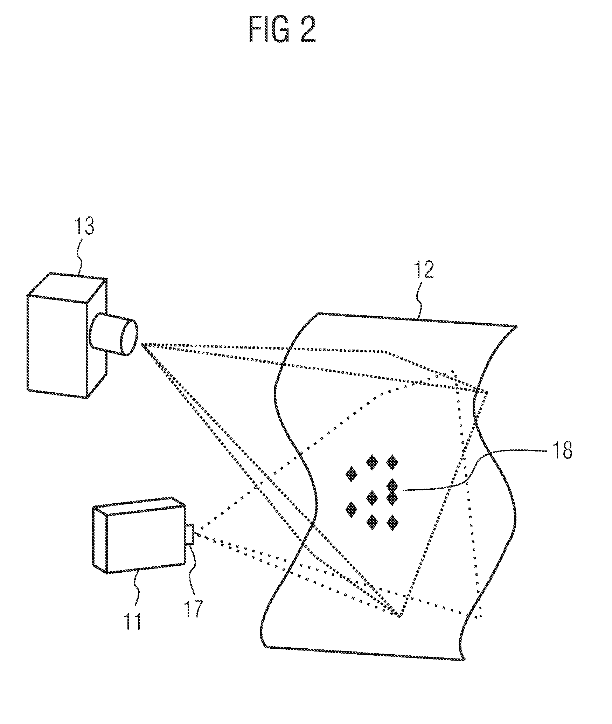

FIG 2 illustrates a schematic diagram depicting strobing of light sources for acquiring high speed images an object according to an embodiment herein. In the example of Fig 2, the illuminating device 11 comprises three light sources 17. The apparatus 10 acquires high speed images of the object 12 using the illuminating device 11 and captures the images using a camera 13 in the same exposure time. The illuminating device 11 can be, for instance, RGB strobe light source 17. Each of the light sources 17 is strobed after a time delay from a reference period for an on-time. The camera 13 is exposed for a time, such that the reflected light from the object 12 due to the illumination of the object 12 using the light sources 17 is captured in a single image frame. Hence, a low cost camera 13 can now obtain three image frames at small intervals of time apart. An inter-frame delay corresponding to the image acquisition time occurs followed by consecutive image acquisition.

Thus, illuminating the object 12 with light sources 17 emitting light of distinct colors and exposing the camera 13 for the entire duration of strobing of the light sources 17 enable capturing the distinct colors of light reflected by the object 12 at varying instances of time into one image. Capturing the reflected light of distinct colors from the object 12 at varying instances of time in one image allows imaging of the vibrating object 12. The capturing of the reflected light from the object 12 in color channels capable of distinguishing the distinct colors of light enable determining the position of the object 12 at varying instances of time. The displacements at various points on the vibrating object 12 are captured by examining the location of feature points of the object 12 in at least two color channels of the image.

For an example, the first light source may be a red light source, the second light source may be a green light source and the third light source may be a blue light source. The on-time of camera 13 and the time delays may be adjusted depending on the area of application. For example, for obtaining frequency of very fast moving objects the delays may be decreased and for measuring frequency of slow moving objects the delays may be increased.

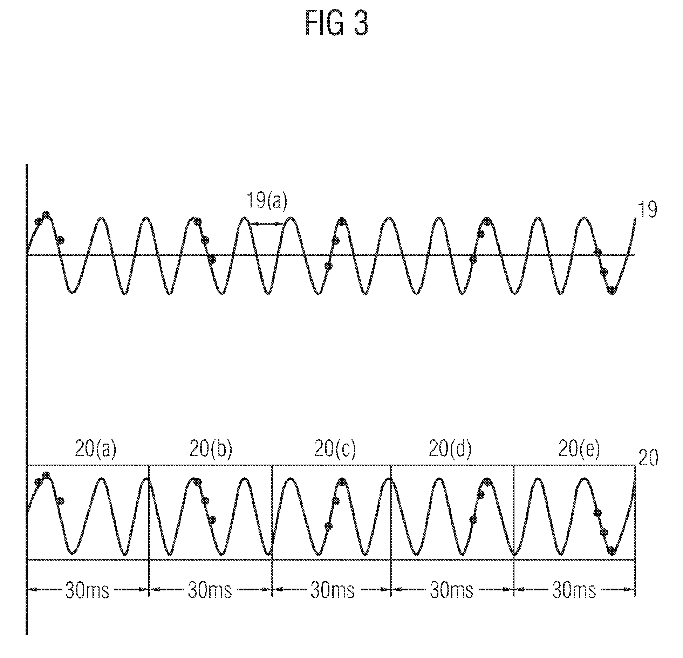

FIG 3 illustrates an exemplary depiction of a sample collection phase of images according to an embodiment herein. As illustrated in Fig 3, the signal 18 is the position of a point on an object 12 which is vibrating. The dominant cycle is selected, shown as 19(a) of which the frequency is to be measured. The apparatus 10 can collect three samples (20) every 30 ms apart and lighting allows collecting three samples at arbitrarily small intervals. Three samples depicted as dots are collected for every 30 ms cycle ((20(a), 20(b),20(c), 20(d), 20(e)). Cycle 20(a) provides sample points (t1,y1), (t2,y2), (t3,y3), cycle 20(b) provides sample points (t4,y4), (t5,y5), (t6,y6), and the subsequent cycles so on. Here, (t1,y1) represents the time of acquisition of the sample and the position of a point on the object at the time of sample acquisition. The positions are located using feature points on the moving object 12 or using reflective markers. The sampling and analysis is performed based on a static vibration of the object 12. The samples collected are used to identify the dominant cycle of vibration. The vibration frequency can then be obtained by using the reciprocal of the time period of the cycle, which is performed using a time wrapping algorithm.

Here, one conventional image frame is split into three RGB frames, comprising of color planes acquired at small intervals apart. The sampling rates after three RGB frames are limited by a camera image acquisition interval, instanced as 30ms. Since most systems vibrate periodically, it does not necessitate capturing many samples in one acquisition cycle itself. Samples at different positions in a 30ms period are collected at different cycles. Thus adequate samples at different parts during one acquisition period of 30 ms are collected.

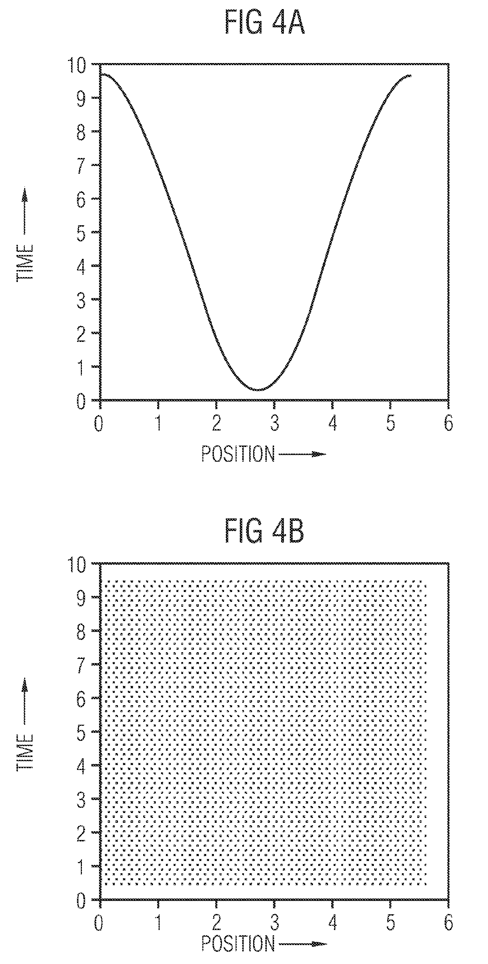

FIG 4A illustrates an exemplary depiction of clustered image samples at correct wrapping time according to an embodiment herein. A time period Tw is initially set as an interval for image acquisition. The samples of image data at different positions are measured at different parts of the time period. The samples thus obtained are wrapped into the initialized time period Tw. For example, Tw = 10, then the samples at (2.1, 3.2), (3.2,.123), (4.5,.34), (12.5,.91), (22.4,.21), (25.1,-2.3) would be wrapped as (2.1, 3.2), (3.2,.123), (4.5,.34), (2.5,.91), (2.4,.21), (5.1,-2.3). If the wrapping time of the samples matches with the initialized time period Tw, the sample image data points would be clustered as illustrated in FIG 4A. This time period is then selected as the dominant cycle of the vibration phenomenon to further calculate the frequency of vibration.

FIG 4B illustrates an exemplary depiction of scattered image samples at incorrect wrapping time according to an embodiment herein. A time period Tw is initially set as an interval for image acquisition. The samples of image data at different positions measured at different parts of the time period. The samples thus obtained are wrapped into the initialized time period Tw. If samples are wrapped at incorrect times as compared to initialized time period Tw, the sample image data points would be scattered as illustrated in FIG 4B. In this case, error metric is obtained by measuring the root mean square value of the pair-wise distance between distinct consecutive points of the object 12. The time period Tw is then scanned and value of Tw corresponding to the least value of the error metric is calculated. This provides the dominant cycle of vibration of points 18 of the object 12. Frequency of vibration of the object 12 can thus be obtained by taking reciprocal of the time period of the dominant cycle.

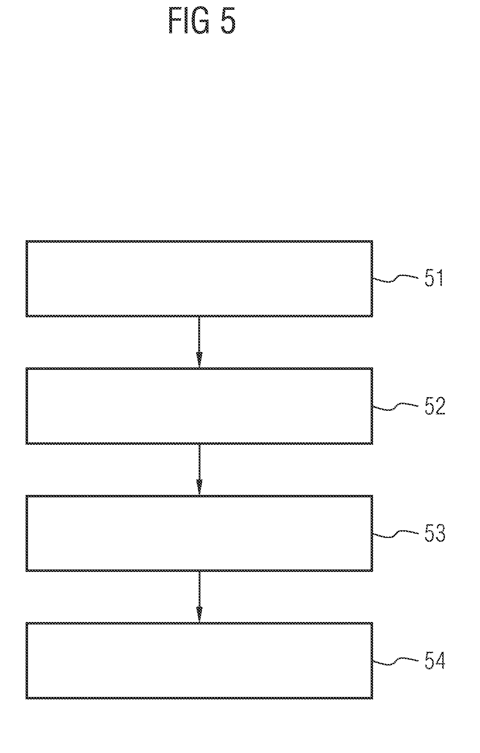

FIG 5 illustrates a flow diagram illustrating a method of computing displacement at different points of the object according to an embodiment herein. At block 51, position information of the objects 12 is obtained in two color channels of the at least two color channels of the image. Next, at block 52, the objects 12 in the two color channels of the at least two color channels is reduced to a point 18 to obtain point sets. At block 53, the corresponding points 18 of the object 12 in the point sets of the two color channels of the at least two color channels of the image are mapped. Moving next to block 54, the displacement at various points 18 on the object 12 is computed as a distance between corresponding points 18 of the object 12 in two color channels of the image.

Preferably, the position information of the points 18 of the objects 12 in two color channels is obtained using a pattern matching algorithm.

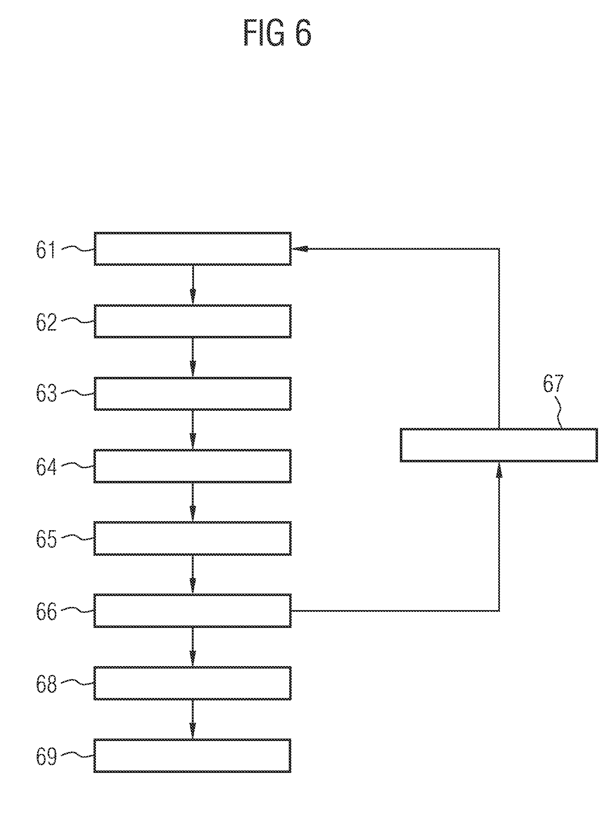

FIG 6 illustrates a flow diagram illustrating a method of measuring frequency of vibration of an object using a time wrapping algorithm according to an embodiment herein. At block 61, the camera 13 is exposed towards the object 12 to capture the images of the vibrating object 12 in a single exposure frame. The illuminating device 11, which is an RGB strobing system acquires high speed images of the object 12 using RGB strobe light. At block 62, the object 12 is strobed with Red light and the red pixels acquire the image. A small interval of time later, the object 12 moves a few pixels away and the object 12 is then strobed with green light at block 63. At block 64, the object 12 is strobed with blue light. At block 65, the composite image results out as the camera 13 remains exposed for the entire time interval. At block 66, the strobe time of the object 12 and the feature points are captured and the positions and displacements of the points 18 on the object 12 are obtained. At block 67, the image acquisition cycle repeats after a small inter-cycle delay corresponding to image acquisition time. At block 68, the time wrapping algorithm is run on stored points 18. Next, at block 69, the frequency of vibrations is measured by computing the dominanat cycle of image acquisition by mapping corresponding image data with a wrapping time of image data acquired.

Preferably, the image data points are clustered if wrapping time is same as that of initialized time period. If the wrapping time is different of the time period, a time period corresponding to least value of error metric of points 18 in point sets of the object 12 in the at least two color channels of the image is computed. Error metric represents root mean square value of the distance between distinct consecutive the points 18 in the point set of the object 12.

Thus, the embodiments described herein enable determining characteristics such as displacement, frequency, etc of an object moving at a high speed using a relatively less expensive camera. Moreover, accuracy of the parameters measured is relatively high. Additionally, the techniques described herein eliminate the requirement of high speed cameras, which are bulky and need external cooling systems, for capturing images of object 12 moving at a high speed. Further, the apparatus exhibits higher dynamic range and can be employed without additional fabrication.

In view of the foregoing, owing to the advantages described, the apparatus for measuring vibration frequency of an object disclosed herein has extensive applications in diverse fields. It can be used for prediction of loading and dynamic stresses and strains on mechanical parts such as crank shafts and shock absorbers for performance analysis. Generally, material life time is measured by the number of fatigue loading cycles which can be estimated by vibration frequency. The apparatus provides a better estimate of the life of a stressed object as the number of loading cycles is calculated in real time, thereby avoiding unpredicted damages.

The apparatus can be used for evaluating large civil structures, vibrating membranes and vibration mode shape analysis of objects.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope of this invention. The scope of the invention is, therefore, indicated by the following claims rather than by the foregoing description. All changes, modifications, and variations coming within the meaning and range of equivalency of the claims are to be considered within their scope.

## Claims

1. A method of measuring vibration characteristics associated to an object (12), said method comprising:
- illuminating said object (12) using at least two light sources (17), said at least two light sources (17) emitting light of distinct colors, wherein each of said at least two light sources (17) are strobed at a respective delay,
- capturing reflected light from said object (12) to result into one image of said object (12), said image comprising at least two distinguishable color channels capable of distinguishing the distinct colors of the light, and
- processing said image to compute said vibration characteristics associated with said object (12) from positions of points (18) on said object (12) in said at least two distinguishable color channels of said image.

2. The method according to claim 1, wherein each of said at least two light sources (17) are strobed for a pre-determined on-time at said respective delay, wherein said respective delay is predetermined.

3. The method according to claim 1, wherein said at least two light sources (17)are selected from the group consisting of a red light source, a green light source, and a blue light source.

4. The method according to claim 1, wherein said vibrating characteristic associated with said object (12) is one of the group comprising at least one of frequency and displacement.

5. The method according to claim 4, wherein said displacement is computed as the distance between positions of said points (18) on said object (12) in two color channels of said at least two distinguishable color channels of said image.

6. The method according to claim 5, wherein said displacement at said points (18) on said object (12) is located using at least one of feature points and reflective markers.

7. The method according to claim 4, wherein said displacement is computed using a pattern matching algorithm.

8. The method according to claim 7, wherein the computation of said displacement using said pattern matching algorithm includes:
- obtaining position information of said points (18) on said object (12) in two color channels of said at least two color channels of said image,
- reducing said object (12) in said two color channels of said at least two color channels of said image to said point (18) to obtain point sets,
- mapping the corresponding points (18) of said object (12) in said point sets of said two color channels of said at least two color channels of said image, and
- computing said displacement of said object (12) as a distance between corresponding said points (18) of said object 12 in said point sets of said two color channels of said at least two color channels of said image.

9. The method as claimed in claim 4, wherein said frequency of vibration of said object (12) is computed using a time wrapping algorithm.

10. The method according to claim 9, wherein computation of said frequency using said wrapping algorithm includes:
- initializing a time period for obtaining position information of said point (18) on said vibrating object (12) in said at least two distinguishable color channels of said image,
- wrapping position information of said points (18) on said object (12) in said two color channels of said at least two color channels of said image into said time period,
- mapping the corresponding said points (18) of said object (12) in said point sets of said two color channels of said at least two color channels of said image at said time period, and
- computing time period of a dominant cycle by equating wrap time period of said points (18)with said time period.

11. The method according to claim 10, wherein if said wrap time period is different of said time period, a time period corresponding to least value of error metric of said points (18) in said point sets of said object (12) in said at least two color channels of said image is computed.

12. The method according to claim 11, wherein said error metric represents root mean square value of the distance between distinct consecutive said points (18) in said point set of said object (12).

13. An apparatus (10) for measuring vibration characteristics associated to an object (12), said apparatus (10) comprising:
- an illuminating device (11) comprising at least two light sources (17), said at least two light sources (17) emitting light of distinct colors, wherein each of said at least two light sources (17) are strobed at a respective delay,
- a color camera (13) to capture reflected light from said object (12) to result into one image of said object (12), said image comprising at least two distinguishable color channels capable of distinguishing the distinct colors of the light, and
- a processing means (14) to process said image to obtain said vibration characteristics associated with said object (12) from positions of points (18) on said object (12) in said at least two distinguishable color channels of said image.

14. The apparatus according to claim 13, wherein each of said at least two light sources (17) are strobed for a pre-determined on-time at said respective delay, wherein said respective delay is pre-determined.

15. The apparatus according to claim 13, wherein said at least two light sources (17)are selected from the group consisting of a red light source, a green light source, and a blue light source.

16. The apparatus according to claim 13, wherein said vibrating characteristic associated with said object (12) is one of the group comprising at least one of frequency and displacement.

17. The apparatus according to claim 13, wherein said displacement is computed as the distance between positions of said points (18) on said object (12) in two color channels of said at least two distinguishable color channels of said image.

18. The apparatus according to claim 17, wherein said displacement at said points on said object (12) is located using at least one of feature points and reflective markers.

19. The apparatus according to claim 16, wherein said displacement is computed using a pattern matching algorithm.

20. The apparatus according to claim 19, wherein the computation of said displacement using said pattern matching algorithm includes configuring said processor to:
- obtain position information of said points (18) on said object (12) in two color channels of said at least two color channels of said image,
- reduce said object (12) in said two color channels of said at least two color channels of said image to said point (18) to obtain point sets,
- map the corresponding points of said object (12) in said point sets of said two color channels of said at least two color channels of said image, and
- compute said displacement of said object (12) as a distance between corresponding said points (18) of said object (12) in said point sets of said two color channels of said at least two color channels of said image.

21. The apparatus according to claim 16, wherein said frequency of vibration of points (18) on said object (12) is computed using a time wrapping algorithm.

22. The apparatus according to claim 21, wherein computing of said frequency using said time wrapping algorithm includes configuring said processor (15) to:
- initialize a time period for obtaining position information of said point (18) on said vibrating object (12) in said at least two distinguishable color channels of said image,
- wrap said position information of said points (18) on said object (12) in said two color channels of said at least two color channels of said image into said time period,
- map the corresponding said points (18) of said object (12) in said point sets of said two color channels of said at least two color channels of said image at said time period, and
- compute time period of a dominant cycle by equating wrap-time period of said points (18)with said time period.

23. The apparatus according to claim 22, wherein if said wrap time period is different of said time period, a time period corresponding to least value of error metric of said points (18)in said point sets of said object (12) in said at least two color channels of said image is computed.

24. The apparatus according to claim 23, wherein said error metric represents root mean square value of the distance between distinct consecutive said points (18) in said point set of said object (12).

## Patentansprüche

1. Verfahren zum Messen von Vibrationseigenschaften, die mit einem Objekt (12) assoziiert sind, wobei das Verfahren umfasst:
- Beleuchten des Objekts (12) unter Verwendung von mindestens zwei Lichtquellen (17), wobei die mindestens zwei Lichtquellen (17) Licht unterschiedlicher Farbe aussenden, wobei jede der mindestens zwei Lichtquellen (17) mit einer jeweiligen Verzögerung gepulst wird,
- Aufnehmen reflektierten Lichts vom Objekt (12), um ein Bild des Objekts (12) zu erhalten, wobei das Bild mindestens zwei unterscheidbare Farbkanäle umfasst, die zum Unterscheiden der unterschiedlichen Lichtfarben fähig sind, und
- Verarbeiten des Bildes, um die Vibrationseigenschaften zu berechnen, die mit dem Objekt (12) assoziiert sind, anhand von Positionen von Punkten (18) auf dem Objekt (12) in den mindestens zwei unterscheidbaren Farbkanälen des Bildes.

2. Verfahren nach Anspruch 1, wobei jede der mindestens zwei Lichtquellen (17) für eine vorbestimmte Einschaltzeit mit der jeweiligen Verzögerung gepulst wird, wobei die jeweilige Verzögerung vorbestimmt ist.

3. Verfahren nach Anspruch 1, wobei die mindestens zwei Lichtquellen (17) aus der aus einer roten Lichtquelle, einer grünen Lichtquelle und einer blauen Lichtquelle bestehenden Gruppe ausgewählt werden.

4. Verfahren nach Anspruch 1, wobei die Vibrationseigenschaft, die mit dem Objekt (12) assoziiert ist, eine aus der Frequenz und/oder Verschiebung umfassenden Gruppe ist.

5. Verfahren nach Anspruch 4, wobei die Verschiebung als die Distanz zwischen Positionen der Punkte (18) auf dem Objekt (12) in zwei Farbkanälen der mindestens zwei unterscheidbaren Farbkanäle des Bildes berechnet wird.

6. Verfahren nach Anspruch 5, wobei die Verschiebung an den Punkten (18) des Objekts (12) unter Verwendung von Merkmalspunkten und/oder von reflektierenden Markierungen ermittelt wird.

7. Verfahren nach Anspruch 4, wobei die Verschiebung unter Verwendung eines Musterabgleichalgorithmus berechnet wird.

8. Verfahren nach Anspruch 7, wobei die Berechnung der Verschiebung unter Verwendung des Musterabgleichalgorithmus Folgendes beinhaltet:
- Erhalten von Positionsinformationen der Punkte (18) auf dem Objekt (12) in zwei Farbkanälen der mindestens zwei Farbkanäle des Bildes,
- Reduzieren des Objekts (12) in den zwei Farbkanälen der mindestens zwei Farbkanäle des Bildes auf den Punkt (18), um Punktmengen zu erhalten,
- Zuordnen der entsprechenden Punkte (18) des Objekts (12) in den Punktmengen der zwei Farbkanäle der mindestens zwei Farbkanäle des Bildes, und
- Berechnen der Verschiebung des Objektes (12) als eine Distanz zwischen den entsprechenden Punkten (18) des Objekts (12) in den Punktmengen der zwei Farbkanäle der mindestens zwei Farbkanäle des Bildes.

9. Verfahren nach Anspruch 4, wobei die Vibrationsfrequenz des Objekts (12) unter Verwendung eines Zeitverpackungsalgorithmus berechnet wird.

10. Verfahren nach Anspruch 9, wobei das Berechnen der Frequenz unter Verwendung des Verpackungsalgorithmus das Folgende beinhaltet:
- Initialisieren einer Zeitperiode zum Erhalten von Positionsinformationen des Punkts (18) auf dem vibrierenden Objekt (12) in den mindestens zwei unterscheidbaren Farbkanälen des Bildes,
- Verpacken von Positionsinformationen der Punkte (18) auf dem Objekt (12) in den zwei Farbkanälen der mindestens zwei Farbkanäle des Bildes in die Zeitperiode,
- Zuordnen der entsprechenden Punkte (18) des Objekts (12) in den Punktmengen der zwei Farbkanäle der mindestens zwei Farbkanäle des Bildes zu der Zeitperiode, und
- Berechnen der Zeitperiode eines dominanten Zyklus durch Gleichsetzen der Verpackungszeitperiode der Punkte (18) mit der Zeitperiode.

11. Verfahren nach Anspruch 10, wobei, falls die Verpackungszeitperiode von der Zeitperiode verschieden ist, eine Zeitperiode entsprechend einem kleinsten Fehlerwertmetrikwert der Punkte (18) in den Punktmengen des Objekts (12) in den mindestens zwei Farbkanälen des Bildes berechnet wird.

12. Verfahren nach Anspruch 11, wobei die Fehlermetrik den quadratischen Mittelwert der Distanz zwischen den unterschiedlichen aufeinanderfolgenden Punkten (18) in der Punktmenge des Objekts (12) darstellt.

13. Vorrichtung (10) zum Messen von Vibrationseigenschaften, die mit einem Objekt (12) assoziiert sind, wobei die Vorrichtung (10) umfasst:
- eine Beleuchtungseinrichtung (11), umfassend mindestens zwei Lichtquellen (17), wobei die mindestens zwei Lichtquellen (17) Licht unterschiedlicher Farbe aussenden, wobei jede der mindestens zwei Lichtquellen (17) mit einer jeweiligen Verzögerung gepulst wird,
- eine Farbkamera (13) zum Aufnehmen reflektierten Lichts vom Objekt (12), um ein Bild des Objekts (12) zu erhalten, wobei das Bild mindestens zwei unterscheidbare Farbkanäle umfasst, die zum Unterscheiden der unterschiedlichen Lichtfarben fähig sind, und
- ein Verarbeitungsmittel (14) zum Verarbeiten des Bildes, um die Vibrationseigenschaften zu erhalten, die mit dem Objekt (12) assoziiert sind, anhand von Positionen von Punkten (18) auf dem Objekt (12) in den mindestens zwei unterscheidbaren Farbkanälen des Bildes.

14. Vorrichtung nach Anspruch 13, wobei jede der mindestens zwei Lichtquellen (17) für eine vorbestimmte Einschaltzeit mit der jeweiligen Verzögerung gepulst wird, wobei die jeweilige Verzögerung vorbestimmt ist.

15. Vorrichtung nach Anspruch 13, wobei die mindestens zwei Lichtquellen (17) aus der aus einer roten Lichtquelle, einer grünen Lichtquelle und einer blauen Lichtquelle bestehenden Gruppe ausgewählt sind.

16. Vorrichtung nach Anspruch 13, wobei die Vibrationseigenschaft, die mit dem Objekt (12) assoziiert ist, eine aus der Frequenz und/oder Verschiebung umfassenden Gruppe ist.

17. Vorrichtung nach Anspruch 13, wobei die Verschiebung als die Distanz zwischen Positionen der Punkte (18) auf dem Objekt (12) in zwei Farbkanälen der mindestens zwei unterscheidbaren Farbkanäle des Bildes berechnet wird.

18. Vorrichtung nach Anspruch 17, wobei die Verschiebung an den Punkten des Objekts (12) unter Verwendung von Merkmalspunkten und/oder von reflektierenden Markierungen ermittelt wird.

19. Vorrichtung nach Anspruch 16, wobei die Verschiebung unter Verwendung eines Musterabgleichalgorithmus berechnet wird.

20. Vorrichtung nach Anspruch 19, wobei die Berechnung der Verschiebung unter Verwendung des Musterabgleichalgorithmus beinhaltet, den Prozessor zu Folgendem auszulegen:
- Erhalten von Positionsinformationen der Punkte (18) auf dem Objekt (12) in zwei Farbkanälen der mindestens zwei Farbkanäle des Bildes,
- Reduzieren des Objekts (12) in den zwei Farbkanälen der mindestens zwei Farbkanäle des Bildes auf den Punkt (18), um Punktmengen zu erhalten,
- Zuordnen der entsprechenden Punkte (18) des Objekts (12) in den Punktmengen der zwei Farbkanäle der mindestens zwei Farbkanäle des Bildes, und
- Berechnen der Verschiebung des Objektes (12) als eine Distanz zwischen entsprechenden Punkten (18) des Objekts (12) in den Punktmengen der zwei Farbkanäle der mindestens zwei Farbkanäle des Bildes.

21. Vorrichtung nach Anspruch 16, wobei die Vibrationsfrequenz von Punkten (18) auf dem Objekt (12) unter Verwendung eines Zeitverpackungsalgorithmus berechnet wird.

22. Vorrichtung nach Anspruch 21, wobei das Berechnen der Frequenz unter Verwendung des Zeitverpackungsalgorithmus beinhaltet, den Prozessor (15) zu Folgendem auszulegen:
- Initialisieren einer Zeitperiode zum Erhalten von Positionsinformationen des Punkts (18) auf dem vibrierenden Objekt (12) in den mindestens zwei unterscheidbaren Farbkanälen des Bildes,
- Verpacken der Positionsinformationen der Punkte (18) auf dem Objekt (12) in den zwei Farbkanälen der mindestens zwei Farbkanäle des Bildes in die Zeitperiode,
- Zuordnen der entsprechenden Punkte (18) des Objekts (12) in den Punktmengen der zwei Farbkanäle der mindestens zwei Farbkanäle des Bildes zu der Zeitperiode, und
- Berechnen der Zeitperiode eines dominanten Zyklus durch Gleichsetzen der Verpackungszeitperiode der Punkte (18) mit der Zeitperiode.

23. Vorrichtung nach Anspruch 22, wobei, falls die Verpackungszeitperiode von der Zeitperiode verschieden ist, eine Zeitperiode entsprechend einem kleinsten Fehlerwertmetrikwert der Punkte (18) in den Punktmengen des Objekts (12) in den mindestens zwei Farbkanälen des Bildes berechnet wird.

24. Vorrichtung nach Anspruch 23, wobei die Fehlermetrik den quadratischen Mittelwert der Distanz zwischen den unterschiedlichen aufeinanderfolgenden Punkten (18) in der Punktmenge des Objekts (12) darstellt.

## Revendications

1. Procédé de mesure de caractéristiques de vibration associées à un objet (12), procédé dans lequel :
- on éclaire l'objet (12) en utilisant au moins deux sources (17) lumineuses, les au moins deux sources (17) lumineuses émettant de la lumière de couleurs distinctes, chacune des au moins deux sources (17) lumineuses étant échantillonnée à un retard respectif,
- on capture la lumière réfléchie par l'objet (12) en une image de l'objet (12), l'image comprenant au moins deux canaux de couleur distinguables aptes à distinguer les couleurs distinctes de la lumière et
- on traite l'image pour calculer les caractéristiques de vibration associées à l'objet (12) à partir des positions de points (18) sur l'objet (12) dans les au moins deux canaux de couleur distinguables de l'image.

2. Procédé suivant la revendication 1, dans lequel chacune des au moins deux sources (17) lumineuses est échantillonnée pendant une session déterminée à l'avance de retard respectif, le retard respectif étant déterminé à l'avance.

3. Procédé suivant la revendication 1, dans lequel les au moins deux sources (17) lumineuses sont choisies dans le groupe consistant en une source de lumière rouge, en une source de lumière verte et en une source de lumière bleue.

4. Procédé suivant la revendication 1, dans lequel la caractéristique de vibration associée à l'objet (12) est l'une du groupe comprenant au moins une fréquence et un déplacement.

5. Procédé suivant la revendication 4, dans lequel on calcule le déplacement comme étant la distance entre des positions des points (18) sur l'objet (12) dans deux canaux de couleur des au moins deux canaux de couleur distinguables de l'image.

6. Procédé suivant la revendication 5, dans lequel on localise le déplacement aux points (18) sur l'objet (12) en utilisant au moins l'un de points particuliers et de repères de réflexion.

7. Procédé suivant la revendication 4, dans lequel on calcule le déplacement en utilisant un algorithme de filtrage par motif.

8. Procédé suivant la revendication 7, dans lequel le calcul du déplacement en utilisant l'algorithme de filtrage par motif comprend :
- obtenir une information de position des points (18) sur l'objet (12) dans deux canaux de couleur des au moins deux canaux de couleur de l'image,
- réduire l'objet (12) dans les deux canaux de couleur des au moins deux canaux de couleur de l'image aux points (18) pour obtenir des ensembles de points,
- cartographier les points (18) correspondants de l'objet (12) dans les ensembles de points des deux canaux de couleur des au moins deux canaux de couleur de l'image, et
- calculer le déplacement de l'objet (12) comme étant une distance entre les points (18) correspondants de l'objet (12) dans les ensembles de points des deux canaux de couleur des au moins deux canaux de couleur de l'image.

9. Procédé suivant la revendication 4, dans lequel on calcule la fréquence de vibration de l'objet (12) en utilisant un algorithme de déformation temporelle dynamique.

10. Procédé suivant la revendication 9, dans lequel le calcul de la fréquence en utilisant l'algorithme de déformation dynamique comprend :
- initialiser une durée pour obtenir une information de position du point (18) sur l'objet (12) vibrant dans les au moins deux canaux de couleur distinguables de l'image,
- déformer dynamiquement l'information de position des points (18) sur l'objet (12) dans les deux canaux de couleur des au moins deux canaux de couleur de l'image en une durée,
- cartographier les points (18) correspondants dans l'objet (12) dans les ensembles de points des deux canaux de couleur des au moins deux canaux de couleur de l'image pendant la durée, et
- calculer la durée d'un cycle dominant en égalisant la durée de déformation temporelle des points (18) à la durée.

11. Procédé suivant la revendication 10, dans lequel, si la durée de déformation dynamique est différente de la durée, on calcule une durée correspondant à la moindre valeur de la métrique d'erreur des points (18) dans les ensembles de points de l'objet (12) dans les au moins deux canaux de couleur de l'image.

12. Procédé suivant la revendication 11, dans lequel la métrique d'erreur représente une valeur quadratique moyenne de la distance entre les points (18) consécutifs distincts de l'ensemble de points de l'objet (12).

13. Installation (10) de mesure de caractéristiques de vibration associées à un objet (12), l'installation (10) comprenant :
- un dispositif (11) d'éclairage, comprenant au moins deux sources (17) lumineuses, les au moins deux sources (17) lumineuses émettant de la lumière de couleurs distinctes, chacune des au moins deux sources (17) lumineuses étant échantillonnée à un retard respectif,
- une caméra (13) en couleurs pour capturer de la lumière réfléchie par l'objet (12) en une image de l'objet (12), l'image comprenant au moins deux canaux de couleur distinguables aptes à distinguer les couleurs distinctes de la lumière, et
- un moyen (14) de traitement pour traiter l'image, afin d'obtenir les caractéristiques de vibration associées à l'objet (12) à partir de positions de points (18) sur l'objet (12) dans les au moins deux canaux de couleur distinguables de l'image.

14. Installation suivant la revendication 13, dans laquelle chacune des au moins deux sources (17) lumineuses est échantillonnée pendant une session déterminée à l'avance de retard respectif, le retard respectif étant déterminé à l'avance.

15. Installation suivant la revendication 13, dans laquelle les au moins deux sources (17) lumineuses sont sélectionnées dans le groupe consistant en une source de lumière rouge, en une source de lumière verte et en une source de lumière bleue.

16. Installation suivant la revendication 13, dans laquelle la caractéristique de vibration associée à l'objet (12) est l'une du groupe comprenant au moins une fréquence et un déplacement.

17. Installation suivant la revendication 13, dans laquelle le déplacement est calculé comme étant la distance entre des positions des points (18) sur l'objet (12) dans deux canaux de couleur des au moins deux canaux de couleur distinguables de l'image.

18. Installation suivant la revendication 17, dans laquelle le déplacement aux points (18) sur l'objet (12) est localisé en utilisant au moins l'un de points particuliers et de repères de réflexion.

19. Installation suivant la revendication 16, dans laquelle le déplacement est calculé en utilisant un algorithme de filtrage par motif.

20. Installation suivant la revendication 19, dans laquelle le calcul du déplacement en utilisant l'algorithme de filtrage par motif comprend la configuration du processeur pour :
- obtenir une information de position des points (18) sur l'objet (12) dans deux canaux de couleur des au moins deux canaux de couleur de l'image,
- réduire l'objet (12) dans les deux canaux de couleur des au moins deux canaux de couleur de l'image aux points (18) pour obtenir des ensembles de points,
- cartographier les points (18) correspondants de l'objet (12) dans les ensembles de points des deux canaux de couleur des au moins deux canaux de couleur de l'image, et
- calculer le déplacement de l'objet (12) comme étant la distance entre des points (18) correspondants de l'objet (12) dans les ensembles de points des deux canaux de couleur des au moins deux canaux de couleur de l'image.

21. Installation suivant la revendication 16, dans laquelle la fréquence de vibration des points (18) sur l'objet (12) est calculée en utilisant un algorithme de déformation temporelle dynamique.

22. Installation suivant la revendication 21, dans laquelle le calcul de la fréquence en utilisant l'algorithme de déformation temporelle dynamique comprend configurer le processeur (15) pour :
- initialiser une durée pour obtenir une information de position du point (18) sur l'objet (12) vibrant dans les au moins deux canaux de couleur distinguables de l'image,
- déformer dynamiquement l'information de position des points (18) sur l'objet (12) dans les deux canaux de couleur des au moins deux canaux de couleur de l'image en une durée,
- cartographier les points (18) correspondants dans l'objet (12) dans les ensembles de points des deux canaux de couleur des au moins deux canaux de couleur de l'image pendant la durée, et
- calculer la durée d'un cycle dominant en égalisant la durée de déformation temporelle des points (18) à la durée.

23. Installation suivant la revendication 22, dans laquelle, si la durée de déformation temporelle est différente de la durée, une durée correspondant à la moindre valeur de la métrique d'erreur des points (18) dans les ensembles de points de l'objet (12) dans les au moins deux canaux de couleur de l'image est calculée.

24. Installation suivant la revendication 23, dans laquelle la métrique d'erreur représente la valeur quadratique moyenne de la distance entre les points (18) consécutifs distincts dans l'ensemble de points de l'objet (12).
